# FASCICULE DE BREVET EUROPEEN

(11) **EP 1 292 468 B1**
(45) Date de publication et mention de la délivrance du brevet: **13.10.2004**
(21) Numéro de dépôt: 01949574.6
(22) Date de dépôt: 28.06.2001
(51) Int. Cl.: B60R 19/04, B60J 5/04

(54) **DISPOSITIF D'ABSORPTION D'ENERGIE DE CHOC POUR PORTE DE VEHICULE AUTOMOBILE**
ANLAGE ZUR ABSORPTION VON AUFPRALLENERGIE FÜR EINE SEITENTÜR EINES LASTKRAFTWAGENS
IMPACT ENERGY ABSORBING DEVICE FOR MOTOR VEHICLE DOOR

(30) Priorité: 29.06.2000 FR 0008428
(43) Date de publication de la demande: 19.03.2003
(73) Titulaire: Faurecia Industries, 92100 Boulogne-Billancourt (FR)
(72) Inventeur: HERANNEY, Yves, F-25200 Montbéliard (FR)
(74) Mandataire: Jacobson, Claude
(86) Numéro de dépôt international: PCT/FR2001/002074
(87) Numéro de publication internationale: WO 2002/000473

(56) Documents cités:
- DE-A- 4 228 626
- FR-A- 2 759 952
- US-A- 4 231 607
- US-A- 5 482 344
- PATENT ABSTRACTS OF JAPAN vol. 1998, no. 05, 30 avril 1998 (1998-04-30) & JP 10 016564 A (MAZDA MOTOR CORP), 20 janvier 1998 (1998-01-20)

## Description

La présente invention concerne un dispositif d'absorption de choc pour porte de véhicule automobile, ladite porte présentant la forme d'un caisson creux grossièrement parallélépipédique et ayant une face supérieure et une face inférieure, et dans lequel est disposé un panneau de vitre, susceptible de coulisser sensiblement verticalement entre une position baissée dans laquelle il est pour l'essentiel escamoté dans le caisson, et une position levée dans laquelle il est pour l'essentiel déployé au travers de l'ouverture de la face. supérieure, ledit dispositif d'absorption étant disposé dans une région inférieure du caisson et comprenant deux blocs d'amortissement définissant entre eux un passage pour le panneau de vitre.

Dans les dispositifs connus de ce type, par exemple US-A-423-1607 comportant les caractéristiques du préambule de la revendication 1, les deux blocs d'amortissement sont complètement disjoints pour ménager un espace définissant le passage du panneau de vitre, et sont constitués par des pièces séparées montées de façon indépendante dans le caisson lors de l'opération de fabrication de la porte. Chacun des blocs est fixé indépendamment l'un de l'autre sur la paroi interne latérale attenante du caisson.

De tels dispositifs ne donnent cependant pas entière satisfaction pour les raisons ci-après.

Tout d'abord, l'espace ménagé entre les deux blocs d'absorption constitue une discontinuité de matière préjudiciable aux performances d'absorption de choc du dispositif, cet espace étant vide et dénué de pièces de déformation. Cet espace. n'a d'autre fonction que de définir le passage du panneau de vitre, et constitue de ce fait un espace perdu.

D'autre part, le temps de montage des blocs dans le caisson de porte et le nombre de points de fixation requis, du fait que les blocs sont montés de façon séparée, ne sont pas optimaux.

En outre, l'étanchéité du côté de la face intérieure de la porte est réalisée par une feuille d'étanchéité qui s'étend de la partie supérieure du caisson jusqu'à sa partie inférieure en passant dans l'espace prévu pour le passage du panneau de vitre, de façon à éviter les zones de fixation du bloc d'absorption attenant sur la face interne respective du caisson. Une telle disposition de la feuille d'étanchéité impose une opération délicate de collage de ladite feuille, alors que cette disposition de feuille ne garantit par une étanchéité optimale.

L'invention vise principalement à remédier à ces inconvénients.

A cet effet, un dispositif d'absorption d'énergie de choc pour porte de véhicule automobile suivant l'invention comporte des organes mobiles de liaison mécanique entre lesdits blocs d'amortissement, chacun desdits organes étant disposé dans le passage du panneau de vitre, de façon à prendre une position active, en l'absence du panneau de vitre, dans laquelle il assure la continuité mécanique entre les blocs et constitue une pièce complémentaire d'absorption d'énergie de choc, et à s'effacer au passage du panneau de vitre pour prendre une position inactive.

Suivant d'autres caractéristiques de l'invention :
- lesdits organes mobiles sont des volets pivotants autour d'une partie de charnière respective solidaire de l'un au moins des blocs, ladite partie de charnière étant pourvue d'un organe élastique qui rappelle le volet dans sa position active ;
- chaque volet présente une face sensiblement plane définissant un plan principal, et dans la position active du volet, ledit plan principal s'étend sensiblement horizontalement ;
- les parties de charnières sont solidaires d'une pièce intermédiaire fixée à l'un des blocs ;
- des échancrures sont pratiquées dans au moins l'un des blocs, en regard de chaque partie de charnière, de façon à former une butée pour une partie d'extrémité libre du volet respectif, définissant la position active dudit volet ;
- les organes mobiles et les blocs sont réalisés dans un même matériau ; et
- les blocs sont fixés à une pièce d'ancrage commune, qui est elle-même rigidement fixée sur le caisson.

L'invention vise également une porte de véhicule automobile comprenant un dispositif d'absorption tel que décrit précédemment.

Suivant une autre caractéristique, une porte de véhicule automobile conforme à l'invention comporte une feuille d'étanchéité collée sur une face du caisson située vers l'intérieur du véhicule, de façon à recouvrir une face du bloc correspondant, qui est opposée à sa face définissant le passage du panneau de vitre.

Des exemples de réalisation de l'invention vont maintenant être décrits en regard des dessins annexés, sur lesquels :
- la Figure 1 est une vue en coupe schématique suivant un plan vertical transversal d'une porte comportant un dispositif d'absorption suivant l'invention ;
- la Figure 2 est une vue de détail en élévation du dispositif d'adsorption représenté à la Figure 1 ; et
- la Figure 3 est une vue de dessus du dispositif représenté à la Figure 2.

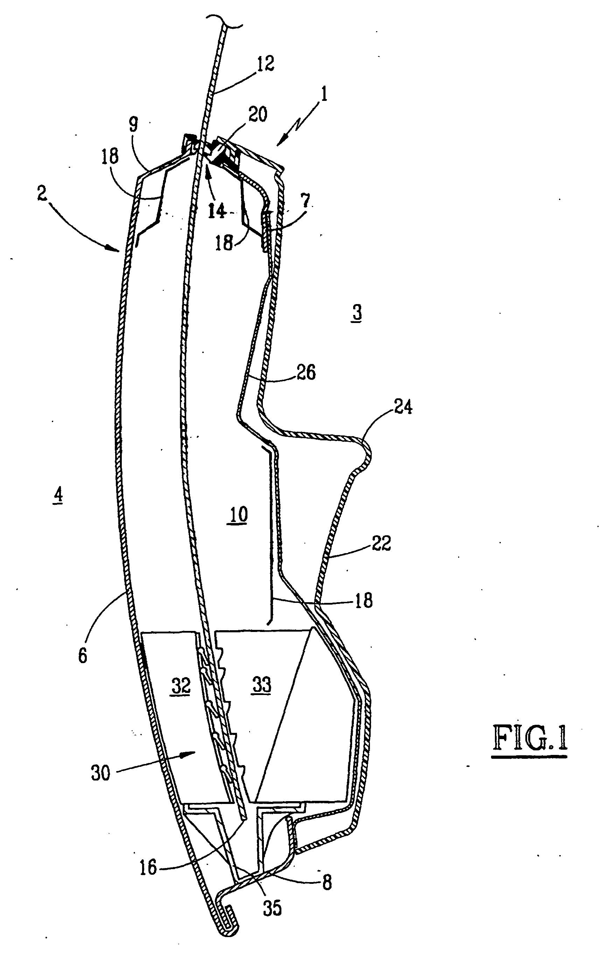

A la Figure 1, on a représenté une porte de véhicule automobile en coupe verticale transversale, ladite porte 1 étant réalisée sous la forme d'un caisson creux. grossièrement parallélépipédique. La porte 1 définit une séparation entre un habitacle 3 de véhicule et l'extérieur 4. Le caisson 2 est constitué de parois en tôle, dont une 6 constitue une paroi latérale extérieure sensiblement verticale, située en vis-à-vis d'une paroi latérale intérieure 7 sensiblement verticale également et s'étendant du côté de l'habitacle 3. Ces parois latérales 6, 7 sont jointes par une paroi inférieure 8 et une paroi supérieure 9. Dans le volume interne 10 du caisson 2, est logé au moins partiellement un panneau de vitre 12 monté coulissant dans le caisson 2 au moyen de dispositifs de guidage et d'actionnement non représentés. La paroi supérieure 9 du caisson 2 présente une ouverture 14 au travers de laquelle peut passer le panneau de vitre 12 de façon à prendre une position entre une position extrême haute et une position extrême basse dans laquelle un bord inférieur 16 du panneau 12 s'étend au voisinage de la paroi inférieure 8 du caisson 2.

La structure constituée par le caisson 2 est consolidée par des raidisseurs 18 prenant appui en plusieurs endroits sur des faces internes du caisson 2. L'ouverture 14 est obturée par un joint à lèvres 20 quelle que soit la position du panneau de vitre 12. Du côté de l'habitacle 3, la paroi latérale intérieure 7 du caisson 2 ainsi que le joint à lèvres sont recouverts d'une garniture généralement en matière plastique rigide 22 réalisant une fonction d'habillage et formée de façon à présenter une surface d'appui 24 formant accoudoir.

Entre la paroi latérale intérieure 7 du caisson 2 et la garniture 22 est interposée une feuille d'étanchéité 26 réalisée généralement dans un matériau synthétique souple et destinée à obturer complètement le passage entre le volume intérieur du caisson 2 et l'habitacle 3.

Un dispositif d'amortissement de choc 30 est placé dans le caisson 2 au voisinage de sa paroi inférieure 8. Il comporte deux blocs 32, 33 de matière plastique, par exemple du polypropylène ou de l'ABS, disposés de part et d'autre du passage du panneau de vitre 12. Le premier bloc 32 s'appuie sur la face interne de la paroi latérale extérieure 6, alors que le deuxième bloc 33 s'appuie sur la face interne de la paroi latérale intérieure 7 du caisson 2. Chacun des blocs 32, 33 est fixé au caisson 2 par l'intermédiaire d'une pièce de fixation 35 en forme de double équerre par des moyens classiques de clippage ou de vissage non représentés. Pour des raisons de facilité de montage, la pièce de fixation 35 coopère avec la paroi inférieure 8 du caisson 2, tandis qu'un bras de chacune des deux équerres de cette pièce de fixation 35 soutient le bloc respectif 32, 33 par la face inférieure de celui-ci.

La feuille d'étanchéité 26 est collée, par sa partie inférieure, entre la face intérieure de la garniture 22 et la face extérieure du deuxième bloc 33. La partie supérieure de la feuille 26 est collée à celle de la tôle 7, de façon classique.

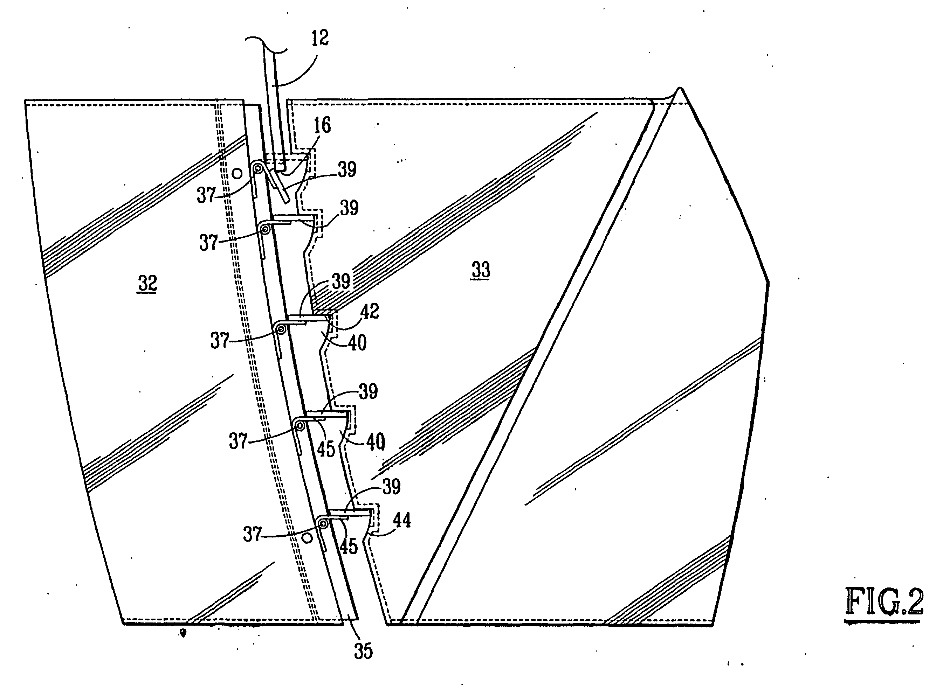

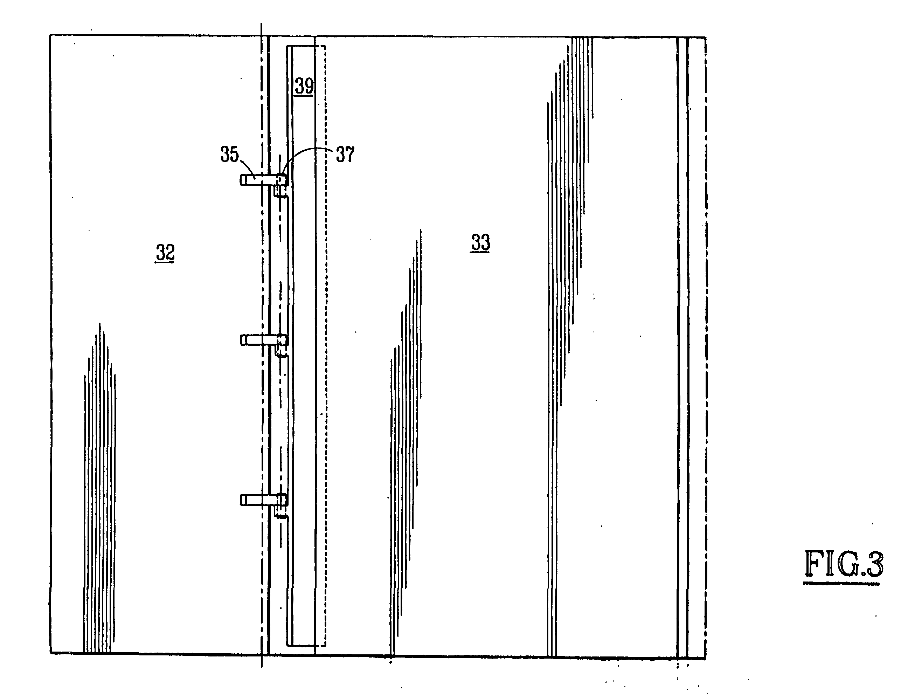

Aux Figures 2 et 3, on pourra observer plus en détail le dispositif d'amortissement de choc 30.

En référence à la Figure 2, on voit que le premier bloc 32, sur son côté tourné vers le passage du panneau de vitre 12, est solidaire de pièces intermédiaires 35 s'étendant sensiblement verticalement le long de la face correspondante du bloc 32. Les pièces intermédiaires 35 portent chacune une pluralité d'axes de charnière 37 s'étendant sensiblement horizontalement et répartis sur la hauteur de la pièce intermédiaire 35 respective. Chaque rangée d'axes de charnière 37 alignés constitue un axe de pivotement sur lequel est monté un volet respectif 39. Chaque volet 39 est constitué d'une plaque d'un matériau plastique de même nature que les blocs 32, 33, bien que l'on puisse envisager de prévoir des matériaux différents.

Le deuxième bloc 33 présente, en regard des axes de charnière 37, des échancrures 40 respectives, présentant une face de butée plane 42 sensiblement horizontale tournée vers le bas, et une face incurvée 44 reliant ladite face de butée 42 à la face du bloc 33 qui délimite le passage du panneau de vitre 12, suivant la forme d'un arc de cercle-correspondant au débattement du volet respectif 39. De ce fait, un volet 39 est susceptible de pivotement vers le bas autour de son axe de charnière 37 à partir d'une position sensiblement horizontale en butée sur la face de butée 42.

En l'absence du panneau de vitre 12, chaque volet 39 est maintenu dans sa position horizontale par l'action d'un organe de rappel élastique classique associé à l'axe de charnière 37, tel qu'un ressort 45 à deux lames orientées à 90°, dont l'une est solidaire du volet 39 et l'autre prend appui sur le bloc 32.

Dans cette position, chaque volet 39. constitue. une. pièce de continuité mécanique entre les deux blocs 32 et 33, c'est-à-dire qu'en cas de choc latéral sur la porte, les volets 39 constituent une pièce de déformation au même titre que les blocs 32 et 33, et absorbent une partie de l'énergie du choc. Il en découle une qualité d'amortissement accrue.

Au passage du panneau de vitre 12, lorsque celui-ci est actionné vers le bas, les volets 39 sont successivement sollicités à pivotement autour de leur axe de charnière 37 par le bord inférieur 16 du panneau de vitre 12. Les volets 39 sont alors amenés dans leur position inactive, dans laquelle ils ne remplissent plus la fonction d'amortissement de choc décrite ci-dessus, position qu'ils reprennent, grâce à l'action de rappel du ressort 45, lorsque le panneau de vitre 12 est à nouveau actionné vers le haut.

Comme il sera mieux vu à la Figure 3, les pièces intermédiaires 35 sont constituées d'inserts verticaux placés dans des rainures complémentaires du premier bloc 32, et répartis uniformément sur la longueur ou une partie de la longueur du premier bloc 32. Les volets 39, pour assurer de façon optimale leur fonction d'amortissement de choc, s'étendent sur l'essentiel de la longueur des blocs 32, 33.

L'invention améliore sensiblement les qualités d'amortissement de choc des dispositifs connus dans ce domaine, grâce à l'adjonction d'organes complémentaires qui n'entravent pas le passage du panneau de vitre. Un tel dispositif 35-37, 39-45 est constitué comme un module qui peut être fabriqué en grande série. et installé dans un caisson de porte, avec une simplification substantielle non seulement des opérations de montage et de fixation, mais aussi de collage de la feuille d'étanchéité.

## Revendications

1. Dispositif d'absorption d'énergie de choc pour porte de véhicule automobile, ladite porte (1) présentant la forme d'un caisson creux (2) grossièrement parallélépipédique ayant une face supérieure (9) et une face inférieure (8), et dans lequel est. disposé un panneau de vitre (12), susceptible de coulisser sensiblement verticalement entre une position baissée dans laquelle il est pour l'essentiel escamoté dans le caisson (2), et une position levée dans laquelle il est pour l'essentiel déployé au travers de l'ouverture (14) de la face: supérieure (9), ledit dispositif d'absorption (30) étant disposé dans une région inférieure du caisson (2) et comprenant deux blocs d'amortissement (32, 33) définissant entre eux un passage pour le panneau de vitre (12), **caractérisé en ce qu'**il comporte des organes mobiles (39) de liaison mécanique entre lesdits.: blocs d'amortissement (32, 33), chacun desdits organes (39) étant disposé dans le passage du panneau de vitre (12), de façon à prendre une position active, en l'absence du panneau de vitre (12), dans laquelle il assure la continuité mécanique entre les blocs (32, 33) et. constitue une pièce complémentaire d'absorption d'énergie de choc, et à s'effacer au passage du panneau de vitre (12) pour prendre une position inactive.

2. Dispositif d'absorption selon la revendication 1, **caractérisé en ce que** lesdits organes mobiles (39) sont des volets pivotants autour d'une partie de charnière respective (37) solidaire de l'un au moins des blocs (32), ladite partie de charnière (37) étant pourvue d'un organe élastique (41) qui rappelle le volet (39) dans sa position active.

3. Dispositif d'absorption selon la revendication 2 ou 3, **caractérisé en ce que** chaque volet (39), dans sa position active, s'étend sensiblement horizontalement.

4. Dispositif d'absorption selon la revendication 2 ou 3, **caractérisé en ce que** les parties de charnières (37) sont solidaires d'une pièce intermédiaire (35) fixée à l'un des blocs (32).

5. Dispositif d'absorption selon l'une quelconque des revendications 2 à 4, **caractérisé en ce que** des échancrures (40) sont pratiquées dans au moins I'un des blocs (33), en regard de chaque partie de charnière (37), de façon à former une butée (42) pour une partie d'extrémité libre du volet (39) respectif, définissant la position active dudit volet.

6. Dispositif d'absorption selon l'une quelconque des revendications 1 à 5, **caractérisé en ce que** les organes mobiles (39) et les blocs (32, 33) sont réalisés dans un même matériau.

7. Dispositif d'absorption selon l'une quelconque des revendications 1 à 6, **caractérisé en ce que** les blocs (32, 33) sont fixés à une pièce d'ancrage (35) commune, qui est elle-même rigidement fixée sur le caisson (2).

8. Porte de véhicule automobile comprenant un dispositif d'absorption suivant l'une quelconque des revendications 1 à 7.

9. Porte de véhicule automobile selon la revendication 8, **caractérisée en ce qu'**elle comporte une feuille d'étanchéité (26) collée sur une face du caisson (2) située vers l'intérieur (3) du véhicule, de façon à recouvrir une face du bloc correspondant (33) qui est opposée à sa face définissant le passage du panneau de vitre (12).

## Patentansprüche

1. Vorrichtung zur Absorption von Aufprallenergie für eine Tür eines Kraftfahrzeugs, wobei die Tür (1) die Form eines im Wesentlichen parallelepipedischen hohlen Kastens (2) hat, der eine Oberseite (9) und eine Unterseite (8) besitzt und in dem eine Fensterscheibenplatte (12) vorgesehen ist, welche in etwa vertikal verschiebbar ist zwischen einer heruntergelassenen Position, in der sie im Wesentlichen in den Kasten (2) eingefahren ist, und einer hochgefahrenen Position, in der sie im Wesentlichen durch eine Öffnung (14) der Oberseite (9) hindurch ausgefahren ist, wobei die Absorptionsvorrichtung (30) in einem unteren Bereich des Kastens (2) angeordnet ist und zwei Dämpfungsblöcke (32, 33) aufweist, die zwischen sich einen Durchgang für die Fensterscheibenplatte (12) definieren,
**dadurch gekennzeichnet,**
**dass** sie bewegliche Elemente (39) zur mechanischen Verbindung der Dämpfungsblöcke (32, 33) miteinander aufweist, wobei jedes Element (39) in dem Durchgang der Fensterscheibenplatte (12) so angebracht ist, dass es in Abwesenheit der Fensterscheibenplatte (12) eine aktive Position einnimmt, in der es die mechanische Kontinuität zwischen den Blöcken (32, 33) sicherstellt und ein zusätzliches Bauteil zur Absorption von Aufprallenergie darstellt, und dass es sich, wenn die Fensterscheibenplatte (12) vorbei gleitet, zurückstellt, um eine inaktive Position einzunehmen.

2. Absorptionsvorrichtung nach Anspruch 1, **dadurch gekennzeichnet, dass** die beweglichen Elemente (39) Klappen sind, welche um einen Teil eines jeweiligen Scharniers (37) verschwenkbar sind, der mit mindestens einem der Blöcke (32) fest verbunden ist, wobei der Teil des Scharniers (37) mit einem elastischen Element (41) ausgestattet ist, das die Klappe (39) in ihre aktive Position zurückstellt.

3. Absorptionsvorrichtung nach Anspruch 2, **dadurch gekennzeichnet, dass** jede Klappe (39) sich in ihrer aktiven Position in etwa in horizontaler Richtung erstreckt.

4. Absorptionsvorrichtung nach Anspruch 2 oder 3, **dadurch gekennzeichnet, dass** die Teile der Scharniere (37) mit einem an einem der Blöcke (32) befestigten Zwischenstück (35) fest verbunden sind.

5. Absorptionsvorrichtung nach einem der Ansprüche 2 bis 4, **dadurch gekennzeichnet, dass** in mindestens einem der Blöcke (33) Einschnitte (40) gegenüber von jedem Scharnierteil (37) so vorgesehen sind, dass sie einen Anschlag (42) für einen Abschnitt des freien Endes der jeweiligen Klappe (39) bilden, wodurch die aktive Position dieser Klappe definiert wird.

6. Absorptionsvorrichtung nach einem der Ansprüche 1 bis 5, **dadurch gekennzeichnet, dass** die beweglichen Elemente (39) und die Blöcke (32, 33) aus einem gleichen Material ausgebildet sind.

7. Absorptionsvorrichtung nach einem der Ansprüche 1 bis 6, **dadurch gekennzeichnet, dass** die Blöcke (32, 33) an einem gemeinsamen Verankerungsstück (35) befestigt sind, welches seinerseits fest auf dem Kasten (2) befestigt ist.

8. Kraftfahrzeugtür, welche eine Absorptionsvorrichtung nach einem der Ansprüche 1 bis 7 aufweist.

9. Kraftfahrzeugtür nach Anspruch 8, **dadurch gekennzeichnet, dass** sie eine Dichtungsfolie (26) aufweist, welche auf eine in Richtung des Innenraums (3) des Fahrzeugs liegende Seite des Kastens (2) geklebt ist, so dass sie eine Seite des entsprechenden Blocks (33) abdeckt, die gegenüber seiner den Durchgang für die Fensterscheibenplatte (12) definierende Seite liegt.

## Claims

1. Impact energy absorption device for a motor vehicle door, said door (1) having the form of a largely parallelepipedal hollow casing (2) with an upper face (9) and a lower face (8), and in which a glass panel (12) is disposed, which is able to slide essentially vertically between a lowered position, in which it is essentially retracted into the casing (2), and a raised position, in which it is essentially extended across the opening (14) of the upper face (9), said absorption device (30) being disposed in a lower region of the casing (2) and comprising two cushioning blocks (32, 33), which define between them a passage for the glass panel (12), **characterised in that** it comprises mobile mechanical connecting elements (39) between said cushioning blocks (32, 33), each of said elements (39) being disposed in the passage of the glass panel (12) so as to assume an active position, in the absence of the glass panel (12), in which it ensures mechanical continuity between the blocks (32, 33) and forms a supplementary impact energy absorption part, and to move aside for passage of the glass panel (12) to assume an inactive position.

2. Absorption device according to Claim 1, **characterised in that** said mobile elements (39) are flaps pivoting around a respective hinge section (37) integral with at least one of the blocks (32), said hinge section (37) being provided with an elastic element (41), which returns the flap (39) to its active position.

3. Absorption device according to Claim 2 or 3, **characterised in that** each flap (39) extends essentially horizontally in its active position.

4. Absorption device according to Claim 2 or 3, **characterised in that** the hinge sections (37) are integral to an intermediate part (35) fastened to one of the blocks (32).

5. Absorption device according to any one of Claims 2 to 4, **characterised in that** indentations (40) are provided in at least one of the blocks (33) facing each hinge section (37) in order to form an abutment (42) for a free end portion of the respective flap (39) defining the active position of said flap.

6. Absorption device according to any one of Claims 1 to 5, **characterised in that** the mobile elements (39) and the blocks (32, 33) are made from the same material.

7. Absorption device according to any one of Claims 1 to 6, **characterised in that** the blocks (32, 33) are fastened to a joint anchoring part (35), which is itself rigidly fastened to the casing (2).

8. Motor vehicle door comprising an absorption device according to any one of Claims 1 to 7.

9. Motor vehicle door according to Claim 8, **characterised in that** it comprises a sealing sheet (26) glued onto a face of the casing (2) located towards the interior (3) of the vehicle in order to cover a face of the corresponding block (33) located opposite its face defining the passage of the glass panel (12).
